# EUROPÄISCHE PATENTANMELDUNG

(11) **EP 3 318 376 A1**
(43) Veröffentlichungstag der Anmeldung: **09.05.2018**
(21) Anmeldenummer: 17001717.2
(22) Anmeldetag: 18.10.2017
(51) Int. Cl.: B27C 1/00, B27M 1/08

(54) **MASCHINE UND VERFAHREN ZUR BEARBEITUNG VON WERKSTÜCKEN AUS HOLZ, KUNSTSTOFF UND DGL**

(30) Priorität: 04.11.2016 DE 102016013408
(71) Anmelder: Michael Weinig AG, 97941 Tauberbischofsheim (DE)
(72) Erfinder: Dawidziak, Albrecht, 97950 Großrinderfeld (DE); Frank, Benjamin, 97944 Boxberg (DE); Burger, Christian, 97941 Tauberbischofsheim (DE)
(74) Vertreter: Kohl, Karl-Heinz

(57) **Zusammenfassung**

Mit der Maschine werden Werkstücke (1) bei ihrem Durchlauf durch die Maschine bearbeitet. Wenigstens eine der Spindeln der Maschine ist mit einer Verstelleinheit (33) gekuppelt, mit der die Spindel zur Erzeugung einer Kontur am Werkstück (1) quer zur Durchlaufrichtung (X) des Werkstückes (1) während des Werkstückdurchlaufes verstellt wird. Die Verstellung der Verstelleinheit (33) erfolgt in Abhängigkeit von der Vorschubgeschwindigkeit des Werkstückes (1) und/oder der Werkstückposition beim Durchlauf des Werkstückes (1). Die Verstelleinheit (33) hat eine solche Steifigkeit und/oder Spielarmut und/oder Positioniergenauigkeit, dass die aus den Werkstücken (1) gebildeten Endprodukte nach dem Austritt aus der Maschine ohne weitere Nachbearbeitung verwendbar sind. Die Endprodukte haben eine solche Geometriegenauigkeit und Oberflächengüte, dass eine weitere Nachbearbeitung nicht mehr notwendig ist.

## Beschreibung

Die Erfindung betrifft eine Maschine sowie ein Verfahren zur Bearbeitung von Werkstücken aus Holz, Kunststoff und dgl. nach dem Oberbegriff des Anspruches 1 bzw. 14.

Es ist bekannt, aus Werkstücken auf stationären Bearbeitungszentren in mehreren Schritten Endprodukte zu fertigen. Solche Endprodukte werden beispielsweise im Möbelsektor eingesetzt, wie Armlehnen, Möbelbeine, Schrankteile und dgl. Die Herstellung solcher Endprodukte ist sehr maschinen- und zeitaufwändig. Jedes Werkstück muss auf dem Bearbeitungszentrum eingespannt werden, damit es vom entsprechenden Werkzeug bearbeitet werden kann. Die Bearbeitungsqualität, insbesondere die Oberflächenqualität, ist in der Regel gering, so dass noch eine Nachbearbeitung erforderlich ist.

Der Erfindung liegt die Aufgabe zugrunde, die gattungsgemäße Maschine und das gattungsgemäße Verfahren so auszubilden, dass bei hoher Leistung Werkstücke einfach und dennoch mit hoher Präzision, insbesondere hoher Oberflächenqualität, zu Endprodukten bearbeitet werden können.

Diese Aufgabe wird bei der gattungsgemäßen Maschine erfindungsgemäß mit den kennzeichnenden Merkmalen des Anspruches 1 und beim gattungsgemäßen Verfahren erfindungsgemäß mit den kennzeichnenden Merkmalen des Anspruches 14 gelöst.

Mit der erfindungsgemäßen Maschine ist es möglich, die Werkstücke im Durchlaufverfahren mit hoher Präzision und insbesondere mit hoher Oberflächenqualität zu bearbeiten, so dass die Endprodukte unmittelbar für ihren vorgesehenen Einsatz weiterverwendet werden können. Eine Nachbearbeitung der Werkstücke nach dem Austritt aus der Maschine ist nicht erforderlich. Die Maschine hat wenigstens eine Spindel, die mit einer Verstelleinheit gekuppelt ist, so dass die Spindel mit dem auf ihr sitzenden Werkzeug während des Durchlaufes des Werkstückes durch die Maschine entsprechend der herzustellenden Kontur quer zur Durchlaufrichtung des Werkstückes verstellt werden kann. Als Verstelleinheit wird ein Aggregat eingesetzt, das sich durch eine hohe Positioniergenauigkeit und/oder Steifigkeit und/oder Spielarmut auszeichnet. Es kann eine Oberflächenqualität erreicht werden, die zumindest der Finishqualität bei der üblichen Oberflächenbearbeitung von Werkstücken entspricht. Unter Finishqualität ist eine solche Bearbeitungsqualität zu verstehen, dass eine Nachbearbeitung des Endproduktes nicht erforderlich ist. Beim Fräsen des Werkstückes mit dem rotierenden Werkzeug entsteht an der Oberfläche des Werkstückes ein Wellenmuster. Der Abstand der Wellen resultiert aus der Spanabnahme in Zykloidenabschnitten beim Umfangsplan- bzw. -profilfräsen und wird als Messerschritt oder Hobelschritt bezeichnet. Je kürzer dieser Messerschritt ist, desto glatter und feiner wird die Werkstückoberfläche. Die Länge des Messerschrittes ist abhängig von der Vorschubgeschwindigkeit v_{f} des Werkstückes, von der Drehzahl n der Spindel sowie von der Anzahl z der oberflächenbildenden Messer des Werkzeugs. Arbeiten alle Schneiden auf demselben Flugkreis, entsprechen die Messerschläge dem Zahnvorschub f_{z}, mit f_{z} = v_{f} / (n • z). Ohne besondere Vorkehrungen bildet sich aufgrund der Toleranzen auch bei mehrschneidigen Werkzeugen nur eine Schneide auf der gefertigten Oberfläche ab. Bei diesem sogenannten Ein-Messer-Finish wird zur Berechnung der Messerschlagweite mit der Formel für den Zahnvorschub z = 1 gesetzt. Darum lässt sich durch Abstimmung dieser drei Parameter beim Durchlaufen des Werkstückes durch die Maschine ein extrem kleiner Messerschritt erreichen, der zu der hohen Oberflächenqualität des Endproduktes führt. Eine gute Qualität und eine hochwertige Oberfläche ergibt sich bei Hobel-/Messerschritten zwischen 1 mm und 2 mm. Für eine hohe Oberflächenqualität ist weiterhin die Gleichmäßigkeit der Messerschritte bzw. des Wellenmusters entscheidend. Ungleichmäßige Messerschritte können beispielsweise aus Werkzeug- oder Werkstückschwingungen, Schwankungen der Vorschubgeschwindigkeit oder Werkzeugdrehzahl und spielbehafteter Verstellbewegungen des Werkzeugs resultieren und können dazu führen, dass die Werkstücke nicht verwendet werden können oder nachbearbeitet werden müssen. Die Drehzahl der Spindel und damit des Werkzeuges wird so auf die Vorschubgeschwindigkeit des Werkstückes abgestimmt, dass die gewünschte hohe Oberflächenqualität, d. h. Gleichmäßigkeit des Messerschritts und gleiche Messerschrittlänge, am Endprodukt erreicht wird.

Da die Verstelleinheit zumindest spielarm, vorteilhaft aber spielfrei ausgebildet ist, wirkt sich bei der Werkstückbearbeitung die Änderung der Verfahrrichtung der Verstelleinheit nicht negativ auf die Oberflächenqualität und die Gleichmäßigkeit des Hobelschrittes aus. Hierzu trägt auch die hohe Steifigkeit der Verstelleinheit bei.

Bei einer gleichbleibenden Vorschubgeschwindigkeit ändert sich je nach Kontur und Zustellgeschwindigkeit des Werkzeuges die relative Vorschubgeschwindigkeit und damit der Zahnvorschub des Werkzeuges. Für einen gleichbleibenden Zahnvorschub, d.h. gleichbleibenden Messerschritt, ist bei einer Erhöhung der relativen Vorschubgeschwindigkeit die Drehzahl des Werkzeuges zu erhöhen. Die Durchlauf- bzw. Vorschubgeschwindigkeit des Werkstückes durch die Maschine und die Zustellgeschwindigkeit des Werkzeuges wird somit mit der Drehzahl der Spindel so gekoppelt, dass sich eine sehr hohe Oberflächenqualität am Endprodukt ergibt. Aus diesem Grunde ist vorteilhaft die Drehzahl der das Werkzeug tragenden Spindel in Abhängigkeit von der Durchlauf- bzw. Vorschubgeschwindigkeit und der Kontur des Werkstückes während des Durchlaufes ständig so einstellbar, dass der Messerschritt konstant gehalten wird. Die Drehzahleinstellung kann durch eine Steuerung oder eine Regelung erfolgen.

Vorteilhaft ist die Verstelleinheit spielfrei ausgebildet, was für die hohe Oberflächenqualität von besonderem Vorteil ist.

Vorteilhaft ist die Verstelleinheit ein Linearmotor. Mit ihm ist es möglich, die Spindel mit hoher Genauigkeit und innerhalb kürzester Zeit so relativ zum Werkstück einzustellen, dass die gewünschte Kontur am Werkstück mit der gewünschten hohen Oberflächenqualität erzeugt wird. Da der Linearmotor kein Spiel und eine hohe Steifigkeit aufweist, kann das Werkzeug hochgenau in die für das Konturenfräsen erforderliche Position verstellt werden.

Die Verstelleinheit kann auch durch einen Kugelrollspindel-Antrieb gebildet werden. Auch mit ihm ist es möglich, das Werkzeug hochgenau, spielfrei und innerhalb kürzester Zeit in die gewünschte Arbeitsposition in Bezug auf das durchlaufende Werkstück zu verstellen. Auch ein Kugelrollspindel-Antrieb kann spielfrei und mit einer hohen Steifigkeit ausgeführt werden, so dass sich eine hohe Positioniergenauigkeit der Spindel bzw. des auf ihr sitzenden Werkzeuges ergibt.

Die Spindel mit dem Werkzeug wird quer zur Vorschubrichtung des Werkstückes durch die Maschine eingestellt. Es besteht in vorteilhafter Weise die Möglichkeit, die Verstelleinheit mit wenigstens einer weiteren Verstellachse zu versehen. Dann kann mit der Verstelleinheit die Spindel bzw. das Werkzeug innerhalb der von den beiden Verstellachsen aufgespannten Ebene verstellt werden.

Vorteilhaft liegen die Verstellachsen der Verstelleinheit in diesem Falle rechtwinklig zueinander. Dies kann sehr einfach dadurch erreicht werden, dass die Verstelleinheit in Form eines Kreuzschlittens ausgebildet ist, dessen beide Schlittenteile unabhängig voneinander rechtwinklig zueinander verstellt werden können.

Damit die Position des Werkstückes in der Maschine während ihres Durchlaufens genau bekannt ist, wird die Werkstückposition durch wenigstens eine Messeinrichtung erfasst. Dadurch lässt sich die Verstellgeschwindigkeit bzw. Verstellbewegung sowie die Drehzahl der Spindel optimal an die Vorschubbewegung des Werkstückes beim Durchlauf durch die Maschine anpassen, um die gewünschte Kontur mit hoher Konturtreue und Oberflächenqualität zu erreichen.

Die Messeinrichtung weist bei einer vorteilhaften Ausführungsform eine Messrolle auf, die an einer nicht zu bearbeitenden Seite des Werkstückes anliegt. Die Messrolle wird hierbei vorteilhaft unter Druck gegen die Werkstückseite gedrückt, so dass beim Durchlauf des Werkstückes kein Schlupf zwischen dem Werkstück und der Messrolle auftritt. Auf diese Weise kann die Werkstückposition in der Maschine hochgenau ermittelt werden.

Die Messrolle sitzt vorteilhaft auf einer Welle, deren Drehung durch einen Drehgeber erfasst wird. Der Drehgeber liefert dementsprechend Signale an die Maschinensteuerung, die entsprechend den Drehgebersignalen die Verfahrgeschwindigkeit bzw. den Verfahrweg der Verstelleinheit sowie die Drehzahl der Spindel im Hinblick auf die hohe Konturtreue und Oberflächenqualität einstellt. Die Vorschubgeschwindigkeit bzw. -bewegung des Werkstückes in der Maschine wird in vorteilhafter Weise über die Maschinensteuerung mit der Verstellgeschwindigkeit bzw. -bewegung der Verstelleinheit, vorteilhaft auch mit der Drehzahl der Spindel, gekoppelt.

Die Verstelleinheit ist in bevorzugter Weise ein Aggregat, das sich einfach an die Maschine anschließen lässt. Dadurch besteht die Möglichkeit, nachträglich ein solches Aggregat an bereits beim Kunden stehende Maschinen anzuschließen, so dass diese Maschinen eine zusätzliche Bearbeitungsmöglichkeit der Werkstücke erhalten.

In bevorzugter Weise ist die Maschine eine Kehlmaschine. Sie ermöglicht es, beim Durchlauf des Werkstückes alle vier Längsseiten des Werkstückes zu bearbeiten. Dabei kann die Kehlmaschine so eingestellt werden, dass beispielsweise nur an einer Werkstücklängsseite die Kontur erzeugt wird, während die restlichen Werkstückseiten nicht bearbeitet werden. Es ist aber auch möglich, mit der Kehlmaschine das Konturfräsen mit einem Geradehobeln und/oder einem Profilieren wenigstens einer weiteren Werkstücklängsseite zu verbinden. Dann kann das Werkstück in einem einzigen Durchlaufvorgang an seinen verschiedenen Längsseiten unterschiedlich bearbeitet werden.

Mit dem erfindungsgemäßen Verfahren lassen sich die Geometrien bzw. Konturen am Werkstück mit hoher Genauigkeit und hoher Oberflächenqualität herstellen. Zunächst wird aufgrund einer gewünschten und frei wählbaren Geometrie bzw. Kontur ein NC-Programm für die Maschinensteuerung erstellt. Dieses NC-Programm wird beim Durchlauf der Werkstücke durch die Maschine pro Werkstück wiederkehrend abgearbeitet. Der Weg bzw. die Position der Werkstücke durch die Maschine wird erfasst. Hierbei lässt sich auch die Vorschubgeschwindigkeit ermitteln, mit der das Werkstück durch die Maschine transportiert wird. Mindestens ein konturgebendes Werkzeug wird quer zur Transportrichtung der Werkstücke durch die Maschine mit mindestens einer Verstelleinheit in Abhängigkeit von der gewünschten Geometrie bzw. Kontur, von Werkzeugdaten, wie dem Werkzeugdurchmesser, und der Werkstückposition verfahren. Die Verstelleinheit weist hierbei eine solche Steifigkeit und/oder Spielarmut und/oder Positioniergenauigkeit auf, dass die fertig bearbeiteten Werkstücke (Endprodukte) nach dem Austritt aus der Maschine eine solche Geometriegenauigkeit (-treue) und Oberflächengüte aufweisen, dass sie ohne weitere Nachbearbeitung verwendbar sind. Die fertig bearbeiteten Werkstücke weisen nach dem Austritt aus der Maschine außer der hohen Geometriegenauigkeit eine hohe Oberflächengüte auf, die zumindest Finishqualität bei der üblichen Oberflächenbearbeitung von Werkstücken entspricht. Darum können die aus der Maschine austretenden Endprodukte unmittelbar ihrem vorgesehenen Einsatzfall zugeführt werden. Da die Werkstückposition, d. h. der Werkstückanfang und die Vorschubgeschwindigkeit bzw. der Vorschub des Werkstückes, in der Maschine erfasst werden, ist die hohe Geometriegenauigkeit und Oberflächengüte bei der Bearbeitung des Werkstückes in einfacher Weise gewährleistet.

Mit dem erfindungsgemäßen Verfahren können die Werkstücke so bearbeitet werden, dass die Gleichmäßigkeit der Hobelschritte des Werkzeuges an den Endprodukten nach dem Austritt aus der Maschine nicht sichtbar beeinträchtigt ist. Insbesondere an den Umkehrpunkten der Verstelleinheit bzw. an den Umkehrbereichen der Kontur kann somit unter Berücksichtigung der hohen Steifigkeit und/oder geringen Spielarmut eine hohe Oberflächenqualität der Endprodukte erreicht werden. Die hohe Positioniergenauigkeit der Verstelleinheit führt darüber hinaus zu einer Geometriegenauigkeit der Kontur und damit des Endproduktes.

Der Anmeldungsgegenstand ergibt sich nicht nur aus dem Gegenstand der einzelnen Patentansprüche, sondern auch durch alle in den Zeichnungen und der Beschreibung offenbarten Angaben und Merkmale. Sie werden, auch wenn sie nicht Gegenstand der Ansprüche sind, als erfindungswesentlich beansprucht, soweit sie einzeln oder in Kombination gegenüber dem Stand der Technik neu sind.

Weitere Merkmale der Erfindung ergeben sich aus den weiteren Ansprüchen, der Beschreibung und den Zeichnungen.

Die Erfindung wird anhand zweier in den Zeichnungen dargestellter Ausführungsbeispiele näher erläutert. Es zeigen
- Fig. 1: in Vorderansicht eine erfindungsgemäße Maschine in Form einer Kehlmaschine,
- Fig. 2: in vergrößerter Darstellung einen Teil der Spindelanordnung der Maschine gemäß Fig. 1,
- Fig. 3: die Einzelheit III in Fig. 1 in vergrößerter Darstellung,
- Fig. 4: in einer Darstellung entsprechend Fig. 2 eine zweite Ausführungsform einer erfindungsgemäßen Maschine,
- Fig. 5: ein auf der Maschine gemäß Fig. 1 bzw. 4 hergestelltes Werkstück.

Mit der nachfolgend beschriebenen Kehlmaschine werden Werkstücke aus Holz, Kunststoff und dgl. durch Konturfräsen bearbeitet. Aus den Werkstücken können mit einer gewünschten Kontur versehene Endprodukte hergestellt werden. Solche konturgefrästen Werkstücke können beispielsweise im Möbelbau eingesetzt werden, beispielsweise als Stuhl- oder Tischbein, als Armlehnen und dgl. Die Konturen der gefrästen Werkstücke können beliebige Form haben und sind frei definierbar. Die Kontur der Werkstücke wird bei deren Durchlauf durch die Maschine hergestellt. Sie hat eine CNC-Steuerung sowie CNC-gesteuerte Werkzeugachsen.

Die Kehlmaschine ist eine Fräsmaschine, mit der die Werkstücke 1 im Durchlaufverfahren an allen vier Längsseiten bearbeitet werden können. Je nach der gewünschten Form des Endproduktes können die Werkstücke 1 nur an einer Seite, aber auch an mehreren oder auch allen Seiten bearbeitet werden. Die Werkstücke 1 sind längliche Werkstücke, die in der Regel viereckigen Querschnitt haben.

Zum Transport der Werkstücke 1 durch die Maschine sind Vorschub- bzw. Transportwalzen 2 vorgesehen, die auf den Werkstücken 1 aufliegen.

Im Einlaufbereich der Kehlmaschine befindet sich ein Abrichttisch 3, auf dem die Werkstücke 1 der Maschine zugeführt werden. An der in Einlaufrichtung rechten Seite des Abrichttisches 3 ist ein Fügelineal 4 vorgesehen, an dem das Werkstück 1 mit seiner in Transportrichtung rechten Längsseite beim Transport durch die Maschine anliegt. Das Fügelineal 4 ist quer zur Transportrichtung des Werkstückes 1 einstellbar, um das Maß der Spanabnahme an der rechten Längsseite des Werkstückes 1 einzustellen. Der Abrichttisch 3 lässt sich in vertikaler Richtung einstellen, wodurch das Maß der Spanabnahme an der Unterseite des Werkstückes 1 eingestellt werden kann.

Über eine Einlauföffnung 5 gelangt das Werkstück 1 in die Maschine. Im Maschinenraum ist eine horizontale untere Abrichtspindel vorgesehen, auf der ein schematisch dargestelltes Abrichtwerkzeug 6 drehfest sitzt. Mit ihm wird beim Durchlauf des Werkstückes 1 dessen Unterseite spanabhebend bearbeitet, vorzugsweise geradegehobelt. In Transportrichtung des Werkstückes 1 hinter dem Abrichtwerkzeug 6 ist eine vertikale rechte Spindel vorgesehen, auf der ein Werkzeug 7 sitzt. Mit ihm kann die in Transportrichtung rechte Längsseite des Werkstückes 1 bearbeitet werden. Im Ausführungsbeispiel wird mit dem Werkzeug 7 die rechte Längsseite geradegehobelt. In diesem Fall ist das Werkzeug 7 ein Hobelkopf mit geraden Messern. Das Werkzeug 7 kann aber auch ein Profilierwerkzeug sein, mit dem an der rechten Werkstückseite ein Profil hergestellt wird. In Transportrichtung des Werkstückes 1 hinter der vertikalen rechten Spindel ist eine vertikale linke Spindel vorgesehen, auf der ein Werkzeug 8 sitzt. Mit ihm wird die in Transportrichtung linke Längsseite des Werkstückes 1 bearbeitet.

Beim Durchlauf durch die Maschine liegen die Werkstücke 1 auf einem Maschinentisch 9 auf, der eine Transportbahn bildet, auf der die Werkstücke 1 aufliegend durch die Maschine transportiert werden. Der Maschinentisch 9 ist maschinenfest und bildet eine horizontale Auflage- und Bezugsebene für die Werkstücke 1.

In Transportrichtung der Werkstücke 1 nach dem rechten Werkzeug 7 wird das Werkstück 1 an einem (nicht dargestellten) Anschlag weiter durch die Maschine geführt. Das Werkstück 1 liegt mit seiner rechten, bearbeiteten Längsseite an diesem Anschlag an, der maschinenfest ist und die vertikale Anlage- und Bezugsebene bildet.

In Transportrichtung hinter der linken vertikalen Spindel ist die Maschine mit einer oberen horizontalen Spindel versehen, auf der ein Werkzeug 10 sitzt. Mit ihm wird die Oberseite des Werkstückes 1 bei dessen Durchlauf durch die Maschine bearbeitet.

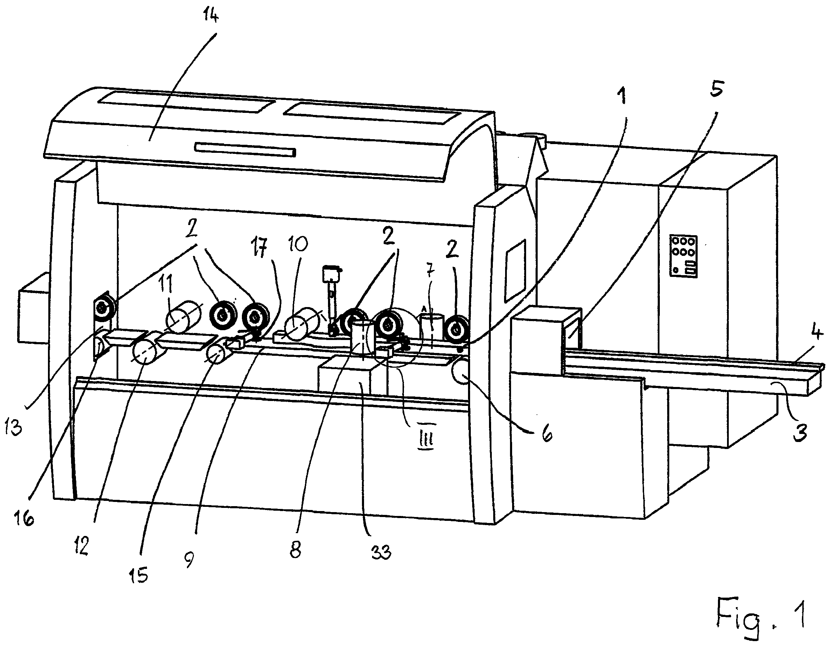

Bei der Ausführungsform gemäß Fig. 1 befindet sich mit Abstand hinter dem oberen Werkzeug 7 ein zweites oberes Werkzeug 11, das um eine horizontale Achse drehbar angetrieben wird.

Mit Abstand hinter dem oberen horizontalen Werkzeug 11 ist eine untere horizontale Spindel vorgesehen, auf der drehfest ein Werkzeug 12 sitzt, mit dem die Unterseite des Werkstückes 1 bearbeitet werden kann.

Das Werkstück 1 gelangt nach seiner Bearbeitung durch eine Auslassöffnung 13 aus der Maschine.

Während der Bearbeitung der Werkstücke 1 ist der Maschinenraum durch eine Maschinenabdeckung 14 geschlossen.

Bei der beispielhaft dargestellten Kehlmaschine ist im Bereich zwischen den beiden oberen Werkzeugen 10, 11 eine untere horizontale Tischwalze 15 vorgesehen. Eine weitere untere horizontale Tischwalze 16 ist in Höhe der Auslassöffnung 13 vorgesehen. Der Maschinentisch 9 ist für die beiden parallel zueinander liegenden horizontalen Tischwalzen 15, 16 sowie die unteren Werkzeuge 6, 12 unterbrochen, damit eine Bearbeitung der Werkstückunterseite durch die Werkzeuge möglich ist.

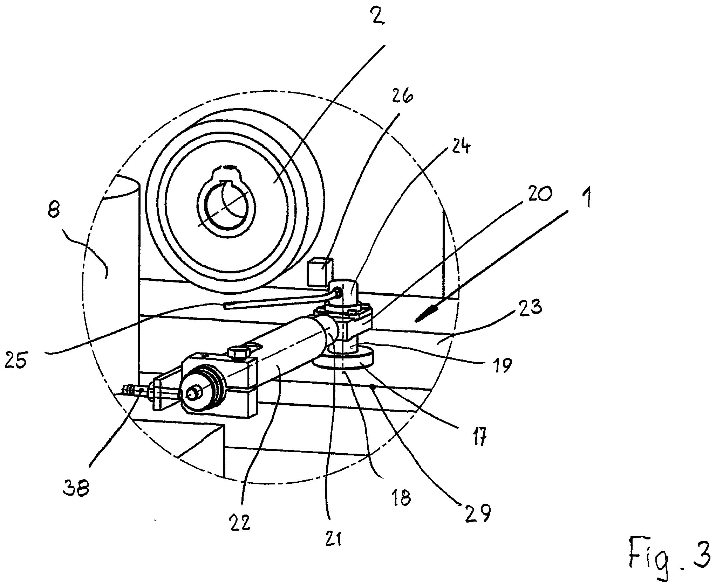

Anhand des dargestellten Ausführungsbeispieles wird nachfolgend beschrieben, wie an der in Transportrichtung linken Längsseite des Werkstückes 1 eine Kontur gefräst wird. Hierfür ist es erforderlich, dass die Position des Werkstückes 1 in der Maschine jederzeit erfasst werden kann. Zu diesem Zweck ist in Transportrichtung des Werkstückes 1 vor dem linken Werkzeug 8 eine erste Messrolle 17 vorgesehen (Fig. 3), die um eine vertikale Achse 18 frei drehbar gelagert ist. Die Messrolle 17 befindet sich am unteren Ende eines vertikalen Messrollenträgers 19, der in einem Halter 20 aufgenommen ist. Er befindet sich am freien Ende eines Tragarmes 21, der in seiner Längsrichtung verschiebbar in einem Halterohr 22 gelagert ist. Es ist in geeigneter Weise maschinenfest angeordnet. Der Tragarm 21 steht unter einer Axialkraft, wodurch die Messrolle 17 gegen die in Transportrichtung linke Längsseite 23 des Werkstückes 1 gedrückt wird. Der Tragarm 21 kann unter Federkraft oder Pneumatik/Hydraulikdruck stehen. Auf diese Weise ist sichergestellt, dass die Messrolle 17 zuverlässig gegen die Längsseite 23 des Werkstückes 1 gedrückt wird. Die Messrolle 17 wird bei der Bewegung des Werkstückes 1 durch dieses sicher gedreht, so dass die Position des Werkstückes 1 zuverlässig erfasst wird.

Mit der Messrolle 17 ist ein Drehgeber 24 drehfest verbunden, der am oberen Ende des Messrollenträgers 19 vorgesehen ist und über eine Leitung 25 Drehgebersignale an die Maschinensteuerung liefert.

Da mit dem linken vertikalen Werkzeug 8 die Kontur an der linken Längsseite 23 des Werkstückes 1 erzeugt wird und sich die Messrolle 17 in Transportrichtung vor dem Werkzeug 8 befindet, lässt sich die Position des Werkstückes 1 einwandfrei erfassen.

Um den Anfang des Werkstückes 1 und damit dessen exakte Position in der Maschine zu erfassen, ist in Transportrichtung vor dem linken vertikalen Werkzeug 3 eine Lichtschranke 26 vorgesehen. Sie befindet sich im Bereich zwischen dem Werkzeug 8 und der Messrolle 17. Wird die Lichtschranke 26 durch den Anfang des Werkstückes 1 durchbrochen, sendet der Sensor der Lichtschranke 26 ein Signal an die Maschinensteuerung. Dies stellt den Startpunkt der Positionsmessung mittels der Messrolle 17 dar.

Der Sensor zur Erkennung des Werkstückanfangs ist nicht auf eine Lichtschranke 26 beschränkt, sondern kann jede Art von Sensorik sein, die in der Lage ist, den Anfang eines Werkstückes, insbesondere eines Werkstückes aus Holz, bei dessen Transport durch die Maschine mit der erforderlichen Genauigkeit und Geschwindigkeit zu erfassen.

Die erste Messrolle 17 und die Lichtschranke 26 können auch in Transportrichtung des Werkstückes 1 vor dem rechten Werkzeug 7 oder erst vor dem oberen Werkzeug 10 oder 11 angeordnet sein, je nach dem mit welchem bzw. welchen Werkzeugen eine Kontur an dem Werkstück bearbeitet werden soll. Auch dann wird, sobald der Werkstückanfang die Lichtschranke 26 durchbricht, ein Startsignal für die Positionsmessung mittels der Messrolle 17 erzeugt.

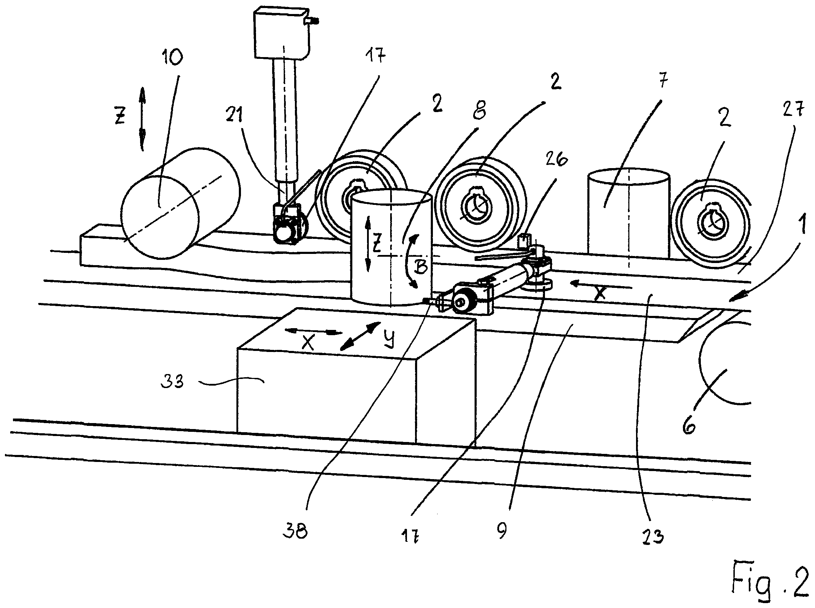

Die Fig. 1 und 2 zeigen die Möglichkeit, dass eine weitere Messrolle 17 nicht an der zu konturierenden Längsseite 23 des Werkstückes 1 anliegt, sondern an dessen Oberseite 27. Da im Ausführungsbeispiel die Werkstückoberseite 27 nicht mit einer Kontur versehen wird, kann mit der Messrolle 17 ebenfalls die Position des Werkstückes 1 in der Maschine genau erfasst werden. Die Messrolle 17 ist in diesem Falle um eine horizontale Achse frei drehbar. Sie wird durch den kraftbelasteten Tragarm 21 in der beschriebenen Weise fest gegen die Werkstückoberseite 27 gedrückt. Der Aufbau der Messanordnung entspricht der beschriebenen Ausführungsform mit der um die vertikale Achse 18 drehbaren Messrolle 17.

Bei der Wegerfassung über Messrollen muss immer eine Messrolle 17 an dem Werkstück 1 anliegen. Zunächst vor dem Werkzeug 8, da eine Messrolle nach dem Werkzeug 8 das Werkstück 1 noch nicht erfassen kann und damit keine Wegmessung möglich ist. Hat das Werkstück 1 die Messrolle 17 vor dem Werkzeug 8 verlassen, kann diese keine Signale mehr liefern und die Wegerfassung muss über die Messrolle 17 nach dem Werkzeug 8 erfolgen.

Durch einen Sensor 38 an der Messrolle 17 wird erkannt, wenn die Messrolle 17 am Werkstück 1 anliegt, da, wenn die Messrolle 17 in Kontakt mit dem Werkstück 1 kommt, der Tragarm 21 im Halterohr 22 axial verstellt wird und dabei den Sensor 38 betätigt.

Zur Wegerfassung wird damit immer eine Messrolle 17 herangezogen, die an dem Werkstück 1 anliegt, wobei über die Steuerung festgelegt ist, wann welche Messrolle 17 für die Wegerfassung herangezogen wird. Es erfolgt quasi eine kaskadenartige Nutzung der Messrollen 17, wobei jeweils die Wegmessung der nachfolgenden Messrolle 17 auf derjenigen der vorangegangenen basiert.

Im Ausführungsbeispiel gemäß Fig. 1 ist die weitere Messrolle 17 in Transportrichtung des Werkstückes 1 nach dem oberen Werkzeug 10 angeordnet. Die Anordnung der Messrollen 17 ergibt sich aus den Bearbeitungsaufgaben und welche Werkzeuge dafür eingesetzt werden müssen. Dabei ist es erforderlich, die Messrollen 17 je nach Bearbeitungsaufgabe flexibel einzusetzen und auszuwerten.

Im dargestellten Beispielsfall werden die beiden Messrollen 17 vor und nach dem Werkzeug 8 eingesetzt.

Die Wegerfassung der Werkstücke 1 kann selbstverständlich auch durch andere bekannte Maßnahmen durchgeführt werden. So kann beispielsweise die Wegerfassung des Werkstückes 1 direkt über den Vorschubantrieb der Maschine erfolgen. Hierbei wird die Drehzahl des Antriebes, der Antriebswelle oder der Transportwalzen erfasst und über den Wirkdurchmesser der Transportwalzen auf den Weg des Werkstückes 1 durch die Maschine umgerechnet.

Des Weiteren ist eine Wegerfassung durch berührungslos arbeitende optische Sensoren möglich, die anstelle der Messrollen 17 eingesetzt und in gleicher Weise wie diese in der Maschine angeordnet sein können.

Der Weg der Werkstücke 1 durch die Maschine kann auch durch Kameras im Maschinenraum erfasst werden. Die Kamera sendet entsprechende Signale an die Maschinensteuerung, die die Kamerasignale auswertet und zur Positionserfassung der Werkstücke heranzieht.

Die Wegerfassung kann auch mittels einer Abstandsmessung mittels Laser an der Stirnseite des Werkstückes 1 erfolgen.

Des Weiteren ist beispielsweise die Verwendung eines Linearmaßstabes parallel zur Vorschubrichtung auf magnetischer Basis für die Wegerfassung möglich. In diesem Falle befinden sich im zu bearbeitenden Werkstück 1 Magnete. Auch die Verwendung von Transpondern in den Werkstücken ist möglich. Ebenso kann ein Linearmaßstab als Inkrementalmaßstab mit zugeordnetem Geber im Werkstück oder ähnlichem eingesetzt werden.

Eine weitere Möglichkeit der Wegerfassung besteht darin, die Werkstücke 1 mittels Ketten zu transportieren. Die Verwendung der Ketten hat den Vorteil, dass kein oder kaum Schlupf zwischen dem Werkstück 1 und der Kette auftritt. Dann wird der Kettenweg bzw. die Kettengeschwindigkeit zur Bestimmung der Position des Werkstückes 1 in der Maschine herangezogen.

Schließlich ist es auch möglich, die Werkstücke beispielsweise mittels Ketten, Bändern, Riemen oder Lineareinheiten zu transportieren, die abstehende Finger aufweisen, mit denen die Werkstücke formschlüssig gehalten sind bzw. formschlüssig durch die Maschine geschoben werden. In diesem Falle kann der Weg der Finger erfasst und zur Positionsbestimmung des Werkstückes 1 in der Maschine herangezogen werden.

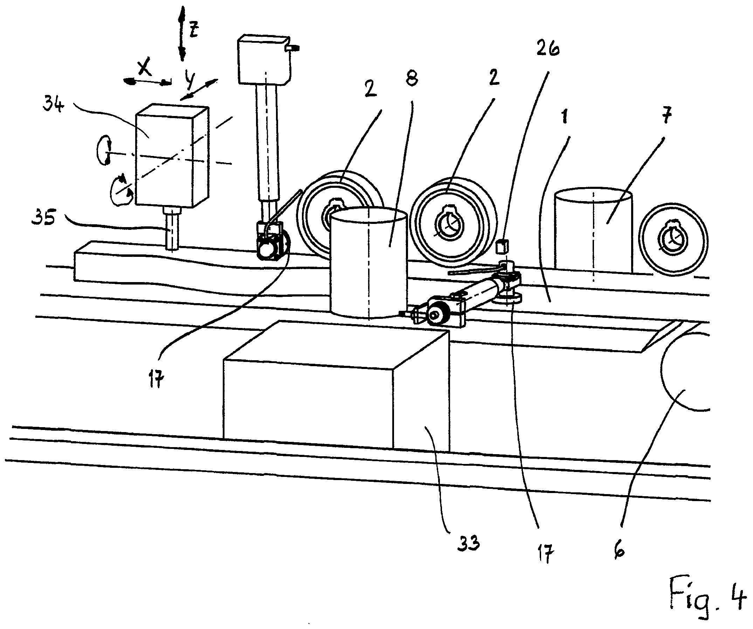

Im dargestellten Beispielsfall erhält das Werkstück 1 an seiner Längsseite 23 eine Kontur 28, wie sie in Fig. 4 dargestellt ist. Diese Kontur 28 wird durch das Werkzeug 8 erzeugt, das auf der vertikalen linken Spindel der Kehlmaschine angeordnet ist. Die Oberseite 27, die Unterseite 29 und die beiden Stirnseiten 30, 31 des Werkstückes 1 bleiben konturenfrei. Während des Durchlaufes des Werkstückes 1 durch die Maschine liegt es mit seiner in Transportrichtung rechten Längsseite 32 am Fügelineal 4 bzw. dem nicht dargestellten Anschlag an.

Die das Werkzeug 8 tragende Spindel ist in Y-Richtung (Fig. 2) und damit senkrecht zur X-Richtung verstellbar. Die X-Richtung ist die Durchlaufrichtung des Werkstückes 1 durch die Maschine.

Die Spindel des rechten Werkzeuges 8 ist mit einer Verstelleinheit 33 verbunden, die nur schematisch dargestellt ist. Die Verstelleinheit 33 ist so ausgebildet, dass mit ihr das Werkzeug 8 schnell und positionsgenau in die zum Konturenfräsen erforderliche Lage in Y-Richtung verstellt werden kann. Bevorzugt wird die Verstelleinheit 33 durch einen Linearmotor gebildet, der in besonderem Maße dafür geeignet ist, das Werkzeug 8 rasch und mit hoher Positioniergenauigkeit in die gewünschte Lage zu verstellen. Hierzu trägt bei, dass sich der Linearmotor durch eine Spielfreiheit und hohe Steifigkeit auszeichnet. Es ist dadurch möglich, das Werkzeug 8 exakt in die zum Konturenfräsen am Werkstück 1 vorgesehene Position zu verstellen.

Als Verstelleinheit 33 kommt auch ein Kugelrollspindel-Antrieb in Betracht. Auch mit ihm lässt sich das Werkzeug 8 mit hoher Genauigkeit und rasch in die gewünschte Position in Y-Richtung verstellen.

Grundsätzlich kommen alle Antriebssysteme in Betracht, die zumindest spielarm, vorteilhaft aber spielfrei sind und eine solche Steifigkeit aufweisen, dass sich besonders bei der Bewegungsumkehr der Verstelleinheit die erforderliche Genauigkeit und Oberflächenqualität erzielen lässt. Hierbei sind insbesondere auch die Dynamik und die zu bewegenden Massen von Verstelleinheit, Spindelaufnahme, Spindel und Werkzeug zu berücksichtigen. Für die Geometriegenauigkeit bzw. -treue ist im Wesentlichen die Positioniergenauigkeit der Verstelleinheit 33 entscheidend. Für die Gleichmäßigkeit des Hobelschritts des Werkzeuges sind die Steifigkeit und das Spiel der Verstelleinheit maßgeblich. Die Steifigkeit beeinflusst insbesondere die Hysterese in den Umkehrpunkten der Verstelleinheit. Die Steifigkeit sowie die Spielarmut bzw. die Spielfreiheit der Verstelleinheit 33 sind so gut, dass die Gleichmäßigkeit der Hobelschritte am Endprodukt nicht sichtbar beeinträchtigt ist, insbesondere in den Umkehrpunkten bzw. -bereichen der Verstelleinheit 33. Wenn davon ausgegangen wird, dass sich die Tiefe der Hobelschritte im einstelligen µ-Bereich bewegt und eine Messerschlagtiefe am Endprodukt ab etwa 10 µm fühlbar wird, liegt auch die Hysterese und das Spiel der Verstelleinheit 33 bei nur wenigen µm.
Der jeweilige Antrieb ist über die Maschinensteuerung so mit der Transportgeschwindigkeit des Werkstückes 1 durch die Maschine verknüpft, dass die Verstellung der Verstelleinheit 33 in Y-Richtung an die Vorschubgeschwindigkeit des Werkstückes 1 durch die Maschine bzw. dessen Vorschubweg gekoppelt ist. Die Messrollen 17 liefern über die Datenleitung 25 die entsprechenden Wegsignale, die von der Steuerung der Maschine ausgewertet werden.

Die Verstelleinheit 33 kann als Zusatzaggregat eingesetzt werden, mit dem es möglich ist, nachträglich Kehlmaschinen mit einer Verstelleinheit nachzurüsten, so dass auch mit ihnen ein Konturfräsen der Werkstücke möglich ist.

Da mit dem Werkzeug 8 an der in Durchlaufrichtung linken Längsseite 23 des Werkstückes 1 die Kontur 28 angebracht wird, ist die Verstelleinheit 33 so an der Kehlmaschine vorgesehen, dass das Werkzeug 8 in Y-Richtung relativ zum Werkstück 1 verstellt werden kann.

Je nach dem an welcher Seite des Werkstückes 1 die Kontur vorgesehen sein soll, kann die Verstelleinheit 33 so an der Kehlmaschine angeordnet sein, dass die Kontur nicht nur an der linken, sondern auch an der rechten Längsseite 32 des Werkstückes 1 vorgesehen sein kann. Es ist sogar möglich, mit den Werkzeugen 7 und 8 gleichzeitig die beiden Längsseiten 23, 32 des Werkstückes 1 mit einer Kontur zu versehen. In diesem Falle sind die Spindeln der beiden Werkzeuge 7, 8 jeweils mit einer Verstelleinheit 33 gekoppelt.

Die Konturen am Werkstück können nicht nur an einer oder an beiden Längsseiten 23, 32 des Werkstückes 1 vorgesehen werden, sondern beispielsweise auch an dessen Oberseite 27 und/oder dessen Unterseite 29. In diesem Falle werden beispielsweise das obere horizontale Werkzeug 10 und das nachfolgende untere horizontale Werkzeug 15 in Z-Richtung mittels der Verstelleinheit 33 verstellt. Auch in diesem Falle ist die Z-Verstellung an den Vorschub des Werkstückes 1 in X-Richtung gekoppelt, so dass die Kontur an der Ober- und/Unterseite des Werkstückes 1 mit der erforderlichen hohen Genauigkeit gefertigt werden kann.

Bei diesen alternativen Ausbildungen liegen die Messrollen 17 stets an derjenigen Werkstückseite an, die nicht mit einer Kontur bearbeitet wird.

Die Verstelleinheit 33 kann auch so ausgebildet sein, dass sie nicht nur in einer Linearrichtung das entsprechende Werkzeug verstellen kann, sondern innerhalb einer Ebene. So ist es bei der dargestellten Ausführungsform möglich, die Verstelleinheit 33 so zu gestalten, dass das Werkzeug 8 in der X-Y-Ebene verstellbar ist. Dies kann beispielsweise dadurch erreicht werden, dass die Verstelleinheit 33 in Form eines Kreuzschlittens gestaltet ist, dessen beide Schlittenteile unabhängig voneinander in X- und in Y-Richtung verstellbar sind. Mit den beiden Kreuzschlitten ist es dann möglich, das Werkzeug 8 innerhalb der X-Y-Ebene in jede beliebige Richtung zu verstellen.
Damit lassen sich auch an den Stirnseiten 30, 31 des Werkstückes 1 mit dem Werkzeug 8 gewünschte Konturen fräsen. Die Verstellgeschwindigkeit kann in X-Richtung mit dem Vorschub synchronisiert werden, wobei dann bei der Verstellung des Werkzeuges 8 in Y-Richtung eine stirnseitige Bearbeitung im rechten Winkel zur Längsseite 23 erfolgt. Andere Winkellagen und stirnseitige Konturen sind durch eine entsprechende Steuerung der X- und Y-Bewegung des Werkzeuges 8 durch die Verstelleinheit 33 möglich.

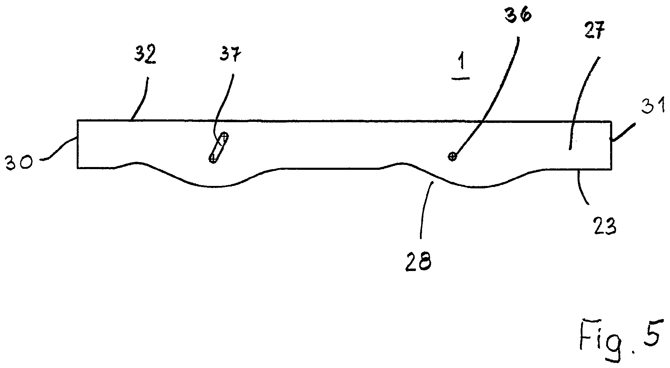

Fig. 4 zeigt eine Maschine, bei der anstelle des horizontalen Werkzeuges 10 ein Aggregat 34 vorgesehen ist. Es hat ein vertikales Werkzeug 35, mit dem Bohrungen 36 (Fig. 5) oder Langlöcher 37 im Werkstück 1 erzeugt werden können. Das Aggregat 34 wird bei der Herstellung der Bohrungen 36 bzw. der Langlöcher 37 in X-Richtung mit dem Werkstück 1 mit der gleichen Vorschubgeschwindigkeit mitgefahren. Im Übrigen ist die Maschine gleich ausgebildet wie das vorige Ausführungsbeispiel.

Bei der Herstellung der Bohrung 36 bewegt sich das Aggregat 34 relativ zum Werkstück 1 in Z-Richtung. Wird das Langloch 37 gefertigt, bewegt sich das Aggregat 34 zusätzlich auch in X- bzw. Y-Richtung relativ zum Werkstück 1. Da das Langloch 37 im Ausführungsbeispiel schräg zur X-Richtung liegt, wird das Aggregat 34 nach der Z-Zustellung innerhalb der X-Y-Ebene bewegt.

Das Werkzeug 35 des Aggregates 34 kann ein Bohrer oder Schaftfräser sein. Das Aggregat 34 ist beispielsweise ein Fräsaggregat, das von oben auf das Werkstück 1 einwirkt. Das Aggregat 34 kann auch in Transportrichtung (X-Richtung) an der linken oder rechten Seite angeordnet sein. Dann können die Bohrungen 36 und/oder die Langlöcher 37 nicht nur in der Oberseite 27, sondern auch in der linken und/oder rechten Längsseite des Werkstückes 1 angebracht werden.

Wie Fig. 4 zeigt, ist vorteilhaft vorgesehen, dass das Aggregat 34 auch um die X- und/oder um die Y-Achse schwenkbar ist. Darum können die Langlöcher 37 sowie auch die Bohrungen 36 unter unterschiedlichen Winkeln in das Werkstück 1 eingebracht werden.

Es ist weiter möglich, die Verstelleinheit 33 so vorzusehen und anzuordnen, dass mit ihr das entsprechende Werkzeug in einer X-Z-Ebene oder in einer Y-Z-Ebene verstellbar ist.

Es ist schließlich möglich, die Verstelleinheit 33 so zu gestalten, dass das entsprechende Werkzeug innerhalb des X-Y-Z-Raumes beliebig verstellbar ist. In diesem Falle weist die Verstelleinheit 33 auch eine Verstellkomponente in Z-Richtung auf.

Die Spindel für das die Kontur fräsende Werkzeug 8 kann auch um eine in X-Richtung liegende Achse B schwenkbar sein (Fig. 2). Dies entspricht der Funktion der Universalspindel einer herkömmlichen Kehlmaschine. Dann können an den Werkstücken 1 Konturen gefräst werden, die nicht rechtwinklig, sondern schräg zur Ober- bzw. Unterseite 27, 29 des Werkstückes 1 liegen. Insbesondere kann in einem solchen Fall das Werkzeug 8 während des Durchlaufes des Werkstückes während des Durchlaufes des Werkstückes 1 in seiner Neigung verändert werden, so dass sich die Winkellage der Kontur über die Werkstücklänge ändert.

Durch die Verstellung des Werkzeuges 8 in radialer (Y-Richtung) und axialer (Z-Richtung) Richtung und das Schwenken um die X-Achse ist in Verbindung mit der Vorschubbewegung des Werkstückes 1 (X-Richtung) erstmalig eine 4-Achsbearbeitung im Durchlauf in einer Kehlmaschine möglich.

Auch bei diesen Varianten ist die Verstelleinheit 33 stets so ausgebildet, dass das entsprechende Werkzeug schnell und positionsgenau in die erforderliche Lage relativ zum Werkstück 1 verstellt werden kann.

Auch bei den beschriebenen Varianten ist es möglich, mehr als eine Verstelleinheit 33 vorzusehen, so dass das Werkstück 1 an mehreren Seiten bearbeitet werden kann.

Mit der jeweiligen Verstelleinheit 33 ist das entsprechende Werkzeug beim Durchlauf des Werkstückes 1 in jede Lage verstellbar. Dadurch können am Werkstück frei programmierbare Konturen vorgesehen werden. Diese Konturen können an allen Seiten des Werkstückes 1 vorgesehen werden. Hierzu sind die entsprechenden Werkzeuge jeweils mit einer Verstelleinheit 33 verstellbar. Da die Werkstücke 1 im Durchlaufverfahren bearbeitet werden und die Verstelleinheit 33 eine schnelle und dennoch positionsgenaue Verstellung des Werkzeuges ermöglicht, ergeben sich sehr hohe Produktivitäten. Zum Konturenfräsen der Werkstücke 1 ist lediglich eine Maschine notwendig, mit der die Werkstücke 1 unterschiedlich bearbeitet werden können. So können beispielsweise die Ober- und Unterseite 27, 29 und die Längsseite 32 geradegehobelt und die Längsseite 23 mit der Kontur 28 versehen werden. Weiter ist es möglich, beispielsweise an der Längsseite 23 die Kontur 28 anzubringen und an wenigstens einer anderen Seite ein Profil in das Werkstück 1 einzubringen. Dementsprechend sind Profilierwerkzeuge auf den entsprechenden Spindeln vorgesehen. Die Kontur sowie die Profile werden dann in einem Durchlauf durch die Maschine am Werkstück 1 erzeugt. Es werden somit mehrere Arbeitsprozesse auf einer Maschine zusammengefasst, was sehr kurze Durchlaufzeiten ermöglicht. Der Platzbedarf ist zudem gering, weil nicht unterschiedliche Bearbeitungsmaschinen für die unterschiedlichen Werkstückbearbeitungen erforderlich sind. Die Lagerhaltung für Zwischenlagerung zwischen den einzelnen Bearbeitungsschritten entfällt. Außerdem werden Transportbeschädigungen, die aus der Zwischenlagerung und dem Entnehmen und Aufgeben der Werkstücke zu verschiedenen Bearbeitungsmaschinen resultieren können, vermieden.

Mit den verstellbaren Werkzeugen, mit denen die Kontur am Werkstück 1 erzeugt wird, lassen sich hohe Oberflächenqualitäten erzielen. Mit der Maschine wird eine Oberfläche in Möbelqualität, d.h. mit sogenannter Finishqualität, am Werkstück erzeugt. Dadurch ist eine Nachbearbeitung der konturierten Endprodukte nicht erforderlich. Die aus der Maschine austretenden, bearbeiteten Endprodukte können daher sofort ihrem Einsatzzweck zugeführt werden. Mit den Verstelleinheiten 33 lassen sich die Werkzeuge in der beschriebenen Weise hochgenau verstellen, so dass am fertig bearbeiteten Werkstück eine hohe geometrische Genauigkeit bei hoher Oberflächenqualität sichergestellt ist.

Die Werkstücke können Stoß-an-Stoß, d.h. in Längsrichtung aneinander liegend, oder einzeln durch die Maschine gefördert und bearbeitet werden. Bei der Stoß-an-Stoß Bearbeitung wird vorteilhaft ein Sensor eingesetzt, der den jeweiligen Werkstückanfang erfasst.

Es lassen sich nicht nur Werkstücke 1 aus Holz, sondern auch aus anderen Materialien bestehende Werkstücke bearbeiten. Beispielsweise können die Werkstücke aus Kunststoff, Aluminium und dergleichen bestehen.

Mit der Maschine ist es erstmals möglich, mit einer im Durchlaufverfahren arbeitenden Profiliermaschine mit der Verstelleinheit 33 Werkstücke 1 mit beliebigen Konturen zu versehen. Insbesondere der Einsatz eines Linearmotors als Verstelleinheit 33 ermöglicht es, mit hoher Präzision am Werkstück 1 die gewünschten Konturen zu fräsen. Die Maschine ermöglicht es dem Benutzer, solche konturierten Werkstücke mit hoher Oberflächengüte in Finish-Qualität und hoher Genauigkeit herzustellen. Auch ermöglicht die Maschine eine hohe Leistung. Mit der Maschine ist es dem Kunden möglich, die Werkstücke 1 wahlweise lediglich an allen vier Seiten gerade zu hobeln, wobei eine Verstellung zumindest eines der Werkzeuge während des Durchlaufes nicht vorgenommen wird. Weiter kann zumindest an einer Seite des Werkstückes 1 eine Kontur gefräst werden, während zumindest an einer weiteren Seite lediglich ein Geradehobeln und/oder eine Profilierung vorgenommen wird.

Zur Herstellung einer Kontur an einem Werkstück wird zunächst, basierend auf einer Werkstückzeichnung mit der gewünschten Konturgebung, ein NC-Programm erstellt. Die Geometrie dieser Kontur ist frei programmierbar. Die NC-Programmerstellung bzw. die NC-Code-Generierung erfolgt in vorteilhafter Weise in einem automatisierten Prozess. Das NC-Programm wird dann an die Maschinensteuerung der Maschine übergeben und bei der Bearbeitung der Werkstücke 1 abgearbeitet, vorteilhaft in einem sich pro Werkstück wiederholenden Prozess. Die Maschine ist eine Durchlaufmaschine in Form einer Kehlmaschine, die mit der Zusatzeinrichtung in Form der Verstelleinheit 33 versehen ist. Sie ist für diejenigen Spindeln vorgesehen, mit denen die Konturen 28 am Werkstück 1 erzeugt werden sollen. Die Maschine hat außerdem ein Erfassungssystem, um die Position der Werkstücke 1 beim Durchlauf der Werkstücke zu erfassen. Je nach der zu erstellenden Kontur 28 weist die Maschine spezielle Führungs- und Haltelemente auf, um die Werkstücke 1 exakt, schwingungs- und spielfrei durch die Maschine zu fördern.

## Patentansprüche

1. Maschine zur Bearbeitung von Werkstücken aus Holz, Kunststoff und dgl., mit wenigstens einer Transportbahn für die Werkstücke, auf der die Werkstücke durch die Maschine transportiert werden, und mit auf Spindeln drehfest sitzenden Werkzeugen, mit denen die Werkstücke bei ihrem Durchlauf durch die Maschine bearbeitet werden.
**dadurch gekennzeichnet, dass** wenigstens eine der Spindeln mit einer wenigstens eine Verstellachse aufweisenden Verstelleinheit (33) gekuppelt ist, mit der die Spindel zur Erzeugung einer Kontur (28) am Werkstück quer zur Durchlaufrichtung (X) des Werkstückes (1) während des Werkstückdurchlaufes in Abhängigkeit von der Vorschubgeschwindigkeit des Werkstückes (1) und/oder der Werkstückposition beim Durchlauf des Werkstückes durch die Maschine verstellbar ist und die eine solche Steifigkeit und/oder Spielarmut und/oder Positioniergenauigkeit aufweist, dass die aus den Werkstücken (1) gebildeten Endprodukte nach dem Austritt aus der Maschine ohne weitere Nachbearbeitung verwendbar sind.

2. Maschine nach Anspruch 1,
**dadurch gekennzeichnet, dass** die Drehzahl (n) der Spindel in Abhängigkeit von der Durchlauf- bzw. Vorschubgeschwindigkeit und der Kontur des Werkstückes (1) während des Durchlaufs ständig so einstellbar, dass der Messerschritt des Werkzeuges konstant gehalten wird..

3. Maschine nach Anspruch 1 oder 2,
**dadurch gekennzeichnet, dass** die Verstelleinheit (33) spielfrei ist.

4. Maschine nach einem der Ansprüche 1 bis 3,
**dadurch gekennzeichnet, dass** die Verstelleinheit (33) ein Linearantrieb, insbesondere ein Linearmotor , ist.

5. Maschine nach einem der Ansprüche 1 bis 3,
**dadurch gekennzeichnet, dass** die Verstelleinheit (33) ein Kugelrollspindel-Antrieb ist.

6. Maschine nach einem der Ansprüche 1 bis 5,
**dadurch gekennzeichnet, dass** die Verstelleinheit (33) wenigstens eine weitere Verstellachse ausweist.

7. Maschine nach einem der Ansprüche 1 bis 6,
**dadurch gekennzeichnet, dass** die Verstellachsen der Verstelleinheit (33) rechtwinklig zueinander liegen.

8. Maschine nach einem der Ansprüche 1 bis 7,
dass die Position des Werkstückes (1) in der Maschine durch wenigstens eine Messeinrichtung erfasst wird.

9. Maschine nach Anspruch 8,
**dadurch gekennzeichnet, dass** die Messeinrichtung eine Messrolle (17) aufweist, die an einer nicht mit einer Kontur bearbeitenden Seite des Werkstückes (1) anliegt.

10. Maschine nach Anspruch 8 oder 9,
**dadurch gekennzeichnet, dass** die Messeinrichtung einen Drehgeber (24) aufweist, der die Drehungen der Messrolle (17) erfasst und entsprechende Signale an eine Steuerung der Maschine sendet.

11. Maschine nach einem der Ansprüche 1 bis 10,
**dadurch gekennzeichnet, dass** die Verstellgeschwindigkeit bzw. die Verstellbewegung der Verstelleinheit (33) über die Steuerung mit der Vorschubgeschwindigkeit des Werkstückes (1) in der Maschine bzw. dem Vorschubweg und damit der Werkstückposition in der Maschine beim Durchlauf des Werkstücks gekoppelt ist.

12. Maschine nach einem der Ansprüche 1 bis 11,
**dadurch gekennzeichnet, dass** die Verstelleinheit (33) ein an die Maschine anschließbares Aggregat ist.

13. Maschine nach einem der Ansprüche 1 bis 11,
**dadurch gekennzeichnet, dass** die Maschine eine Kehlmaschine ist.

14. Verfahren zur Bearbeitung von Werkstücken aus Holz, Kunststoff und dergleichen, insbesondere mit einer Maschine nach einem der Ansprüche 1 bis 13, bei dem die Werkstücke bei ihrem Durchlauf durch eine Maschine bearbeitet werden,
**dadurch gekennzeichnet, dass** basierend auf einer gewünschten und frei wählbaren Geometrie bzw. Kontur ein NC-Programm für die Maschinensteuerung erstellt wird, das beim Durchlauf der Werkstücke (1) pro Werkstück wiederkehrend abgearbeitet wird, dass der Weg bzw. die Position der Werkstücke (1) durch die Maschine erfasst wird, dass mindestens ein konturgebendes Werkzeug quer zur Transportrichtung (X) der Werkstücke (1) mittels mindestens einer Verstelleinheit (33) in Abhängigkeit von der gewünschten Kontur (28), von Werkzeugdaten und der Werkstückposition verfahren wird, und dass die Verstelleinheit eine solche Steifigkeit und/oder Spielarmut und/oder Positioniergenauigkeit aufweist, dass die fertig bearbeiteten Werkstücke (1) nach dem Austritt aus der Maschine eine solche Geometriegenauigkeit (-treue) und Oberflächengüte aufweisen, dass sie ohne weitere Nachbearbeitung verwendbar sind.
